(19) Europäisches Patentamt
European Patent Office
Office européen des brevets

(11) **EP 4 518 140 A1**

(12) **EUROPEAN PATENT APPLICATION**

(43) Date of publication:
**05.03.2025 Bulletin 2025/10**

(21) Application number: **23194984.3**

(22) Date of filing: **01.09.2023**

(51) International Patent Classification (IPC):
*H02N 1/00* (2006.01)

(52) Cooperative Patent Classification (CPC):
**H02N 1/004**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ecole Polytechnique Fédérale de Lausanne (EPFL)**
**EPFL-TTO**
**1015 Lausanne (CH)**

(72) Inventors:
• **SCHALLER, Sylvain**
**CH-2000 NEUCHATEL (CH)**
• **SHEA, Herbert**
**CH-2036 CORMONDRECHE (CH)**

(74) Representative: **Gsmart**
**Route de Florissant 81**
**1206 Genève (CH)**

(54) **AN ELECTROSTATIC ACTUATOR FOR PROVIDING RELATIVE TRANSLATIONAL MOTION BETWEEN COMPONENT PARTS THEREOF**

(57) An electrostatic actuator is presented for converting electrical energy into a mechanical force to produce a relative translational motion between a stator and a slider of the actuator in a longitudinal direction. According to an embodiment, the actuator comprises a plurality of mutually electrically insulated stator driving electrodes being arranged along the stator generally in the longitudinal direction of the actuator, and a plurality of mutually electrically insulated slider driving electrodes being arranged along the slider generally in the longitudinal direction of the actuator, the stator driving electrodes being electrically insulated from the slider driving electrodes, wherein the stator driving electrodes are grouped and interconnected into n stator busses and the slider driving electrodes are grouped and interconnected into n slider busses, said groupings being such that the n stator busses are configured to allow their connection, in a predetermined order, to one each from n power supply outputs and the n slider busses are configured to allow their connection, in a different predetermined order, to one each from the n power supply outputs, each of said n power supply outputs configurable to provide different phases of time-varying power, said connections allowing to create a first travelling potential distribution over the stator driving electrodes and a second travelling potential distribution over the slider driving electrodes, thus creating electrostatic forces between the stator and the slider to produce said relative translational motion. Advantageously, the plurality of stator driving electrodes from each one from the n busses are formed along a corresponding one from n at least first stator wires, each first stator wire, for each bus, having a three-dimensional configuration of electrically insulated stator windings extending in the longitudinal direction around an electrically insulating core comprising a dielectric; and the plurality of slider driving electrodes from each one from the n busses are formed along a corresponding one from n at least first translator wires, each first slider wire, for each bus, having a three-dimensional configuration of electrically insulated slider windings, concentric with the first stator windings, extending in the longitudinal direction around at least a part of the first stator windings; said three-dimensional configurations of stator windings and slider windings allowing for said connections between the n power supply outputs, the n stator busses and the n slider busses to thus be inherently achievable at any point along the respective windings.

Figure 4

## Description

## TECHNICAL DOMAIN

The present invention relates generally to the field of electrostatic motors. More particularly, the invention concerns a linear electrostatic actuator.

## BACKGROUND

Electrostatic motors are known in the art and operate on the principle of attraction and repulsion of electric charges. Early electrostatic motors were generally rotational motors, finding use in certain applications such as electrostatic generators.

Advances in materials science and electronics led to the development of new types of electrostatic rotating motors having a planar shape. Electrostatic micromotors are known, comprising a planar rotor made of a thin metal film and a stator, the stator comprising both metal films and an insulating layer, which may be an oxide or a polymer, for example. Other types of micromotors are known where the rotor has an insulator on it. Such micromotors are capable of rotating at high speeds and are widely used in precision instruments and control systems.

When two electrodes, separated by a dielectric material, are misaligned and have different electrical potentials, an electrostatic attractive force arises, which tends to cause the electrodes to realign, minimizing the distance between them. If one uses a series of electrodes, one can obtain continuous sliding motion when driven with an appropriate set of time-varying voltages. This is the fundamental principle behind a linear electrostatic motor.

Providing power to known linear motors, using a 3-phase AC power supply (or more than 3 phases as the case may be) is essential, allowing for two traveling potential distributions to be generated, so that their field interaction drives the slider of the motor. Known linear electrostatic motors have the problem that it is sometimes complex to be able to design a suitable means for providing the 3-phase AC power to the right places within the groups of electrodes. The problem in designing a suitable means for bringing the power to where it has to go is further exacerbated if the AC power supply has more than 3 phases. The electrodes are usually parallel plates, which extend generally in a planar fashion, over two dimensions, resulting in a somewhat complicated way for bringing the correct electrostatic stimulus to the respective electrodes, usually involving a system of vias and/or bridges. Furthermore, in known electrostatic linear motors, which are generally ribbon-shaped motors, it is also complicated to ensure that the proper alignment between the electrodes is maintained during operation of the motor and that the proper gap between the electrodes is maintained during the operation. In fact, complicated alignment systems generally have to be employed in state-of-the-art linear electrostatic motors to ensure that the electrodes remain parallel to each other and that they remain in their optimum relative positions during operation of the motor.

Electrostatic motors are very suitable for applications requiring low energy and high electrical energy density and they allow small lightweight devices to be made. Other applications where electrostatic linear motors may find use include exoskeletons, artificial muscles, soft robotics and wearable devices. It is therefore desirable to provide an elongate electrostatic actuator for providing relative translational motion between component parts thereof which overcomes some of the disadvantages of known linear electrostatic motors.

## BRIEF SUMMARY OF THE INVENTION

It is a goal of the present invention to provide a linear electrostatic motor having a fibre-like form factor. Hence there is disclosed herein a linear electrostatic actuator comprising a first elongate and preferably flexible member and a second elongate and preferably flexible member, the first member and the second member being concentric internal and external fibres designed to slide into each other under an electrostatic stimulus. The first member may be referred to as a stator and the second member may be referred to as a slider or a translator.

According to a first aspect, there is disclosed herein an electrostatic actuator for converting electrical energy into a mechanical force for producing a relative translational motion between a stator of the actuator and a slider of the actuator, preferably in a longitudinal direction. According to an embodiment, the actuator comprises a plurality of mutually electrically insulated stator driving electrodes arranged along the stator generally in the longitudinal direction of the actuator, and a plurality of mutually electrically insulated slider driving electrodes arranged along the slider generally in the longitudinal direction of the actuator, the stator driving electrodes being electrically insulated from the slider driving electrodes. In the electrostatic actuator, the stator driving electrodes are grouped and interconnected into n stator busses and the slider driving electrodes are grouped and interconnected into n slider busses. This grouping and interconnecting allows for each of the n stator busses to be connected, in a predetermined order, to one from each of n power supply outputs, while also allowing for each of the n slider busses to be connected, in a different predetermined order, to one from each of the n power supply outputs. The n power supply outputs may come from an n-phase power supply circuit, where each of the n power supply outputs provide different phases of an ac power supply. The ac power supply can be any multi-phase time-varying power supply providing unipolar or bipolar signals such as square or rectangular waves, sine waves, triangular waves, etc. For example, a three-phase unipolar square wave power supply may be used, thus allowing for bidirectional translation between the stator and the slider. As known in the prior art in the domain of linear or translational electrostatic motors, this configuration allows for the establishment of a first travelling potential distribution over the stator driving electrodes and for the establishment of a second travelling potential distribution over the slider driving electrodes, thus creating electrostatic forces between the stator and the slider which bring about the relative translational motion between the stator and the slider. Three phases is the minimum number of phases required to produce relative translational motion in the longitudinal plane in both directions, i.e. bidirectional motion. Two phases would be sufficient to produce motion in one direction.

Advantageously, the arrangement of stator driving electrodes, described above, is a three-dimensional arrangement, with the plurality of stator driving electrodes from each one from the n busses being formed along a corresponding one from n at least first stator wires, each first stator wire, for each bus, having a three-dimensional configuration of electrically insulated stator windings extending in the longitudinal direction around an electrically insulating core comprising a dielectric. Similarly, the arrangement of slider driving electrodes, described above, is a three-dimensional arrangement, with the plurality of slider driving electrodes from each one from the n busses are formed along a corresponding one from n at least first slider wires, each first slider wire, for each bus, having a three-dimensional configuration of electrically insulated slider windings, concentric with the first stator windings, extending in the longitudinal direction around at least a part of the first stator windings. These three-dimensional configurations of stator windings and slider windings allows for said connections between the n power supply outputs, the n stator busses and the n slider busses to thus be inherently achievable at any point along the respective windings. This avoids the need for complicated systems of vias or other mechanisms for crossing the various connections without shorting them.

According to another aspect, a linear electrostatic motor having a stator and a slider is disclosed, the motor comprising an actuator as described above for converting electrical energy into a mechanical force to produce a relative translational motion between the stator and the slider.

According to a preferred embodiment, the electrostatic actuator is configured to be operated using a three-phase electrostatic stimulus, the actuator comprising three first stator driving electrodes and three first slider driving electrodes corresponding to each of the respective three phases. In this embodiment, bidirectional longitudinal motion may be engendered between the stator and the slider of the electrostatic actuator.

According to other embodiments, a plurality of first stator driving electrodes may be present and/or a plurality of slider driving electrodes may be present. Depending on how the plurality of electrodes are arranged, different effects may be achieved. For example, the wire in which the stator driving electrodes are formed may be wound in concentric loops around a core while the wires in which the slider driving electrodes are formed may be wound around the wire in which the stator driving electrodes are formed, thus forming two concentric three-dimensional structures, where the slider wires surround the stator wires. In another variant, there may be a single, long, stator, with a number of sliders being formed around adjacent sections of the stator. In still another variant, there may be a plurality of stators, in parallel alignment, each of the stators having at least one slider around it. The sliders may be linked, or otherwise tied or bonded together so that their power may be combined in order to provide more force for engendering movement to a body.

Any type of wire may be used for the electrodes. According to an advantageous embodiment, wire having a generally flattened profile may be used, thus providing increased force between the stator and slider. According to different embodiments, the windings may be cylindrical in profile or square or rectangular or triangular, for example i.e they may form circular loops, square loops or triangular loops etc.

## BRIEF DESCRIPTION OF THE DRAWINGS

The inventive concepts described herein will be better understood thanks to the detailed description which follows and the accompanying drawings, which are given as non-limiting examples of embodiments of the inventive concepts, namely:

Figure 1, illustrating the principal by which state of the art actuators for relative translational motion between a stator and a slider operate;
Figure 2, illustrating a schematised view of an actuator according to an embodiment of the present invention;
Figure 3a, showing a view of a cross section of a part of the actuator shown in Figure 2, at AA;
Figure 3b, showing a view of a cross-section of a part of the actuator shown in Figure 2, at BB;
Figure 3c, showing the same cross-sectional view of part of the actuator as that shown in Figure 3b but where the actuator has a cylindrical dielectric core made from a polymer;
Figure 4, showing more detail of the actuator shown in Figure 2, where a dielectric core is visible as well as three helically wound stator electrodes embedded in an insulating material and three helically wound slider electrodes embedded in an insulating material;
Figure 5a, illustrating the ease with which electrical connections between component parts of the actuator and a three-phase power supply may be made;
Figure 5b, showing an example of a three-phase ac power supply which may be used to drive an actuator according to an embodiment of the invention;
Figure 6, illustrating an example of a wire having a generally flattened cross section for use in the spirally configured wire forming the respective electrodes of the actuator;

Figure 7, in which a generally cylindrical form is given to the stator and the slider;

Figure 8, showing an embodiment in which the stator and the slider are given a generally square or rectangular cross section;

Figures 9a and 9b, illustrating different views of an actuator according to an embodiment of the invention comprising more than one slider, the sliders being coaxial around each other and around the stator;

Figure 9b showing a cross-section of the multi-slider shown in Figure 9a;

Figure 10, illustrating an embodiment of the invention wherein the stator has a toroidal form;

Figure 11, in which multiple adjacent sliders are shown around a common stator;

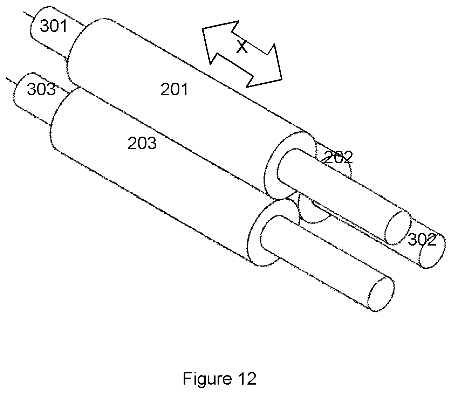

Figure 12, illustrating an embodiment of the invention having multiple parallel sliders around multiple parallel stators;

Figures 13a and 13b, in which a comparison between the types of motion possible with known electrostatic actuators and the type of motion which is possible using an actuator according to an embodiment of the present invention is illustrated, with figure 13a representing known actuators and figure 13b representing actuators described herein; and

Figure 14, showing an example plot of how the efficiency and output power of an actuator according to an embodiment disclosed herein may vary with input power or speed depending on the load force.

## DETAILED DESCRIPTION

Embodiments of the present invention may be used to build a fibre-shaped linear-motion electrostatic motor. Such a motor comprises two or more concentric fibres, configured to slide relative to each other under an electrostatic stimulus.

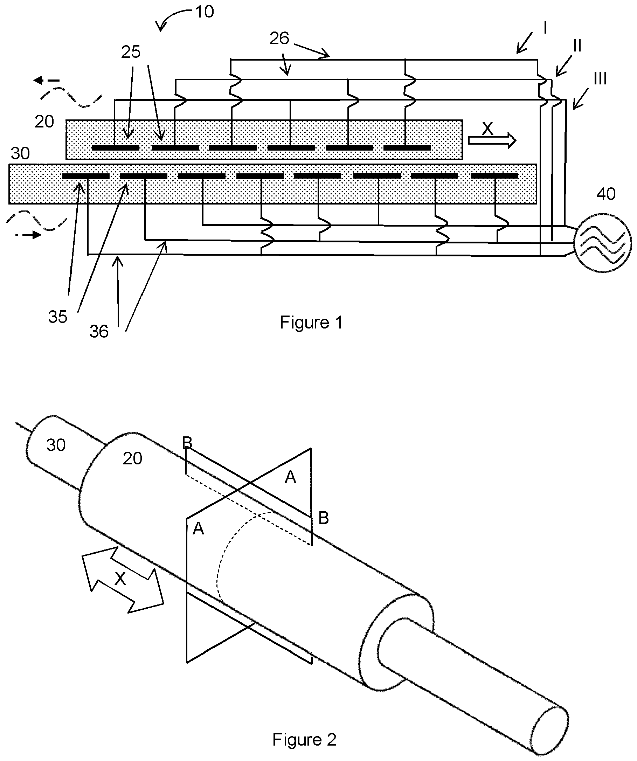

Figure 1 illustrates a cross-sectional schematic representation of a known electrostatic actuator for providing relative translational motion between a stator and a slider using a three-phase ac power supply. This type of actuator is defined by the preamble of the main independent claim for the present invention.

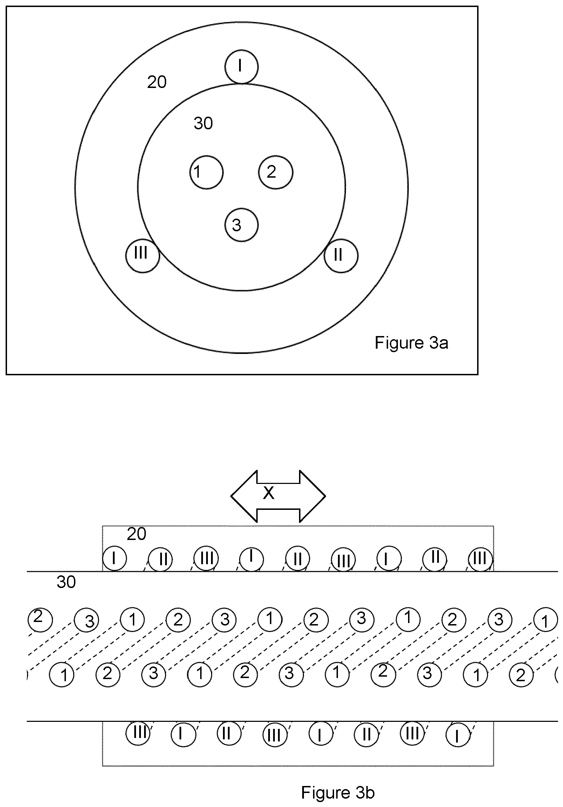

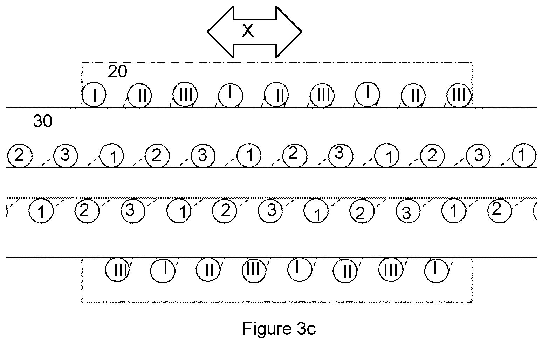

Figure 2 shows a view of an electrostatic actuator according to an embodiment of the present invention, with figure 3a showing detail of a cross-section through AA and figure 3b showing a cross section through BB. The actuator comprises an external and an internal fibre that slide onto each other when driven by an appropriate ac multi-phase electrostatic stimulus. For each phase of the power supply, the internal fibre, or stator, has a number of windings of a wire or other conductor comprising a plurality of stator electrodes and the external fibre, or slider, has a number of windings of another wire or conductor comprising a plurality of slider electrodes. For a three-phase power supply, the stator has three stator wires comprising a plurality of stator electrodes, wound in in the form of a helix and the slider has three slider wires comprising a plurality of stator electrodes, wound in the form of a helix.

The three stator wires are electrically insulated from each other, as are the three slider wires, with all of the stator wires being electrically insulated from the slider wires. According to an embodiment, the stator wires may be wound around a core of a dielectric material. The core may be air or another gas, or it may be a liquid or even a physical core made from a dielectric material such as a polymer. According to an embodiment, the stator wires may simply be embedded within a fibre of polymeric dielectric material, thus ensuring their electrical insulation from each other and from the slider wires. The slider wires may be wound around the stator, in a way which allows the slider to slide over the stator. Generally, the slider is significantly shorter in length than the stator, but in some embodiments both the slider and the stator may have substantially the same length, which in some cases may be 100s of times longer than the thickness or diameter of the stator or of the slider. Slider wires may be embedded in a polymer fibre to provide sufficient insulation between the slider windings and between stator and slider windings. The stator and slider may be substantially concentric.

Other numbers of stator wires and slider wires are possible, such as two or four or more. However, three electrodes is the minimum number which will allow for bidirectional translation of parts of the actuator to be achieved. According to an embodiment the windings are helical in form. Although it is not essential, in a preferred embodiment the pitch of the stator windings substantially matches the pitch of the slider windings.

Each of the stator wires receive a different respective phase of the multi-phase AC power supply, as do each of the slider wires. In a preferred embodiment, the order in which the three power phases are provided to the stator wires is different from the order of power phases provided to the slider wires, thus setting up the static forces which engender relative motion between the stator and the slider.

Figure 3b illustrates a linear electrostatic motor presenting a fibrous format according to an embodiment of the present invention, which comprises an optional core filament. Conductive wires, one per phase, each comprising stator electrodes are wound around the core. The resulting structure may be described as an internal fibre comprising, in this example, three conductive wires which each comprise a plurality of stator electrodes. Conductive wires, one per phase may be wound around a part of the stator to form the slider, the wires each comprising slider electrodes. According to an embodiment, insulation between windings may be achieved by alternately winding insulating wires between each of the conductive wires. According to another embodiment, the wires may be coated with an insulator. According to an embodiment, the conductive wires are made from copper and they are embedded within a polymer fibre. In another embodiment, the wire may be a conductive wire covered with a thin insulator and wound around a core. The resulting structure of conductive wires wound around the internal fibre in a way which allows the windings to slide over the internal fibre, may be called an external fibre comprising, again in this example, three conductive wires which each comprise a plurality of slider electrodes. By setting up a first travelling potential distribution over the stator electrodes using a three-phase power supply appropriately connected to the three conductive wires of the internal fibre and a second travelling potential distribution over the slider electrodes using different phases of the power supply appropriately connected to the three conductive wires of the external fibre, electrostatic forces can be generated which cause the slider to move with respect to the stator, i.e. they cause the external fibre to slide over the concentric internal fibre in the direction of the axis of the two fibres.

Actuators like the one described above are readily manufacturable today as the required precision for the realising appropriate winding pitches to make a working actuator having such a fibrous format is now available in the industry. Since the concentric fibres are self-aligning, there are no problems due to having to control the alignment of the electrodes. In a preferred embodiment, the internal winding pitch matches the external pitch. If the internal and external winding pitches do not match, then there may be a loss of force, which may be a substantial loss. However, in some cases, such losses may be acceptable and so in certain embodiments the need for exact matching between internal pitch and external pitch may not be essential.

The wires may be wound and coated with an insulating material. According to an embodiment, the actuator comprises an internal fibre with a plurality of helically wound wires and an external fibre with a plurality of helically wound wires. The external fibre is configured to be able to slide over the inner fibre. When a suitable sequence of voltages is applied to the inner and outer wires, the two fibres move relative to each other. The direction and speed of motion can be controlled by controlling the stimulus.

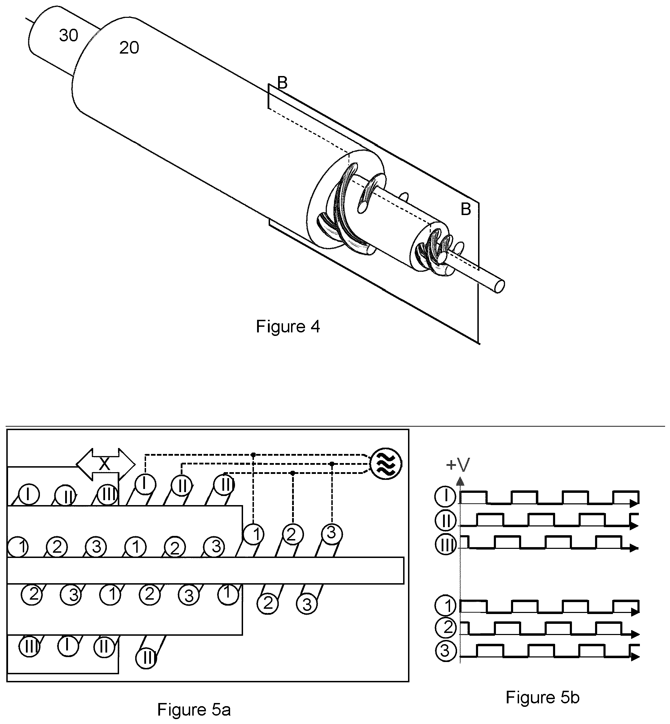

The A-A cross section in Fig 4 shows multiple wires wound on both the internal and external fibres. In this example, three wires are used for each the internal and external part, although the number of wires is not limited to three.

In this configuration, in contrast to planar devices known in the state of the art, each electrode (wire in this case) is continuous and so connection to a suitable power supply is rendered easy. In the schematic, for instance, the electrode labelled as "1" represents only one conductive wire.

The same process can be used to wind and encapsulate both the internal and the external fibres. The core filament may be removed from the external fibre and replaced by the internal fibre.

The fibres may be flexible. Windings in the two fibres should have the same pitch, but as explained above, if the associated power loss is acceptable, then it is not essential to have exact pitch matching between internal and external windings. Windings are easily achieved using machines to wind the wires around the respective fibres for a given number of rotations.

In order to increase efficiency, it is preferable to have the smallest possible distance between the internal and external windings, however a trade-off is to be made between reducing friction between the two fibres and increasing force which can be provided by the actuator. Voltage level also plays a role, as does weight. Dimension also play a role: for increased dimensions an increase in voltage is required. A limit for the ratio of voltage and size is reached when the voltage required would be sufficient to cause breakdown of air. Example spacings between internal and external fibres are between. $100\mu$m to $200\mu$m i.e. $200\mu$m to $400\mu$m given that the gap appears on both sides.

Any conductive wire may be used and any insulator may be used as long as it has sufficient resistivity in comparison to that of the conductive wire and as long as it has a sufficiently high breakdown field. In preferred embodiments copper is used as the conductor and nylon as an insulator. The insulator may be an elastomer as long as it is non-conductive. The insulator should preferably have a high dielectric coefficient (i.e. a large dielectric permittivity). An insulating oil may be used between the internal and external fibres to provide a reduction in friction between the moving parts.

Embodiments of the present invention may feature non-cylindrical wires. For example, wires having square cross-section may be wound onto triangular shaped cores, cylindrical shaped cores or square/triangular shaped cores etc. In a preferred embodiment, the wire has a generally flattened cross-section. By generally flattened, this can mean oblong, oval, square or rectangular, for example.

According to an embodiment, windings are achieved using interspersed copper and nylon wires, for example $200\mu$m copper and $100\mu$m nylon.

Scaling down is possible: scaling down allows for increase in force, and reduction in size of the corresponding support and drive circuitry, meaning that actuators according to embodiments of the present invention may be made lighter so that they could easily be installed in a drone.

Two phases are sufficient to have a moving actuator, but three phases is preferable because it allows for bi-directional translation. More than three phases is also possible, e.g. 4 phases.

Figure 5b illustrates the electrostatic stimulus which may be used in an embodiment described herein and shows how simple it is to achieve the connections from the AC supply to the different electrodes of the actuator. Many different types of drive waveforms (electrostatic stimulus) are possible. For the case of a fibre with 3 phases and a unipolar voltage stimulus, the figure shows that the fibre's electrical connections to the power supply are easily achievable. As shown in figure 5b, when both fibres are supplied with a suitable multi-phase electrical drive, they slide over each other. The figure also shows plots of the voltage for each wire versus time and shows how a travelling wave can be generated using a unipolar square signal. Bipolar signals are also possible.

As the frequency of the 3-phase electrostatic stimulus is increased, so the speed of the sliding motion increases proportionally, evidence that the motor's activation is primarily a result of the electrostatic force. Furthermore, it is noteworthy that there is no need for alignment structures required in state-of-the-art previous linear electrostatic motors. As mentioned before, the connections with the power supply are remarkably straightforward.

Although actuators according to embodiments disclosed herein allow for substantial relative translational motion between a stator fibre and a slider fibre to be achieved, torsional forces may also be present, due to the helical configuration of the respective windings, and so in embodiments where the stator and the slider fibres have a generally cylindrical cross-section, as well as the desired relative translational motion, a relative twisting motion may also be present to a certain extent.

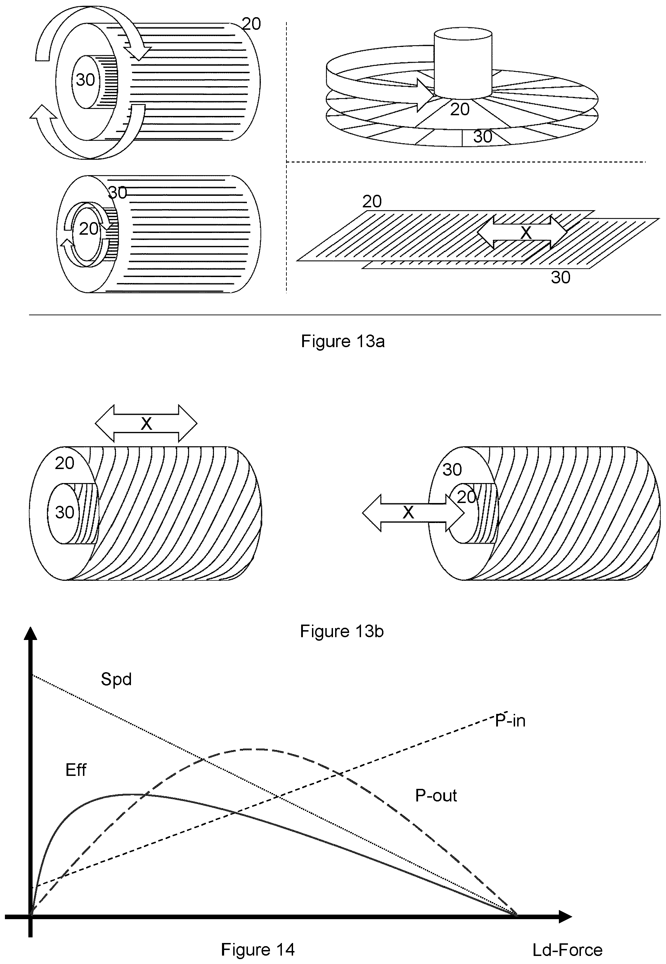

Figure 13a shows the types of relative motion between stator rotor in electrostatic rotary motors or between stator and slider of electrostatic linear motors which was achievable using known technology, whereas figure 13b shows the type of coaxial translation which is achievable using an electrostatic linear motor in which an embodiment of the present invention is deployed. As shown, known linear electrostatic motors do not allow for coaxial translation to be achieved: only, coaxial rotation, planar rotation, or planar translation were possible. Electrostatic motors in which an embodiment of the present invention is deployed allow for coaxial translation of fibrous-format constituent parts to be achieved and provide several advantages over known planar designs of electrostatic motors. Such advantages include:

- the fibres can be flexible, enabling complex bending, and thus enabling force and displacement to be generated on arbitrary and complex shapes (such as on a human body)
- the coaxial design enables greatly simpler electrical connections to 3-phase power supply, or more than three phases, compared to planar designs
- the external fibre can rotate without hindering the desired linear motion.
- the coaxial fibres do not require alignment systems to maintain the needed parallelism when moving, unlike planar systems.
- fibre geometry allows for easy integration in clothing, by techniques such as weaving and knitting.

- the fibre geometry allows for easy configuration of multiple actuators in parallel, liber muscle fibre bundles.

It is clear from figures 4 and 5a that embodiments of the present invention allow for extremely simple connections to be made between the respective groups of electrodes onto their corresponding busses and then to the proper phase of the power supply. In fact, each one from the three stator wires which can be seen in Figure 4, forming a three-dimensional shape around the core of the actuator constitutes, at the same time, a plurality of stator driving electrodes and the interconnect required to bring all of those electrodes onto one bus to be connected to one phase of the power supply. The three wires therefor form three groups of electrodes and their busses, to each be connected to a respective phase of the power supply. Similarly, each slider wire forming a three-dimensional shape, in this case a generally spiral shape, around the insulation for the stator wires constitutes, at the same time, a plurality of slider driving electrodes and the interconnect required to bring all of the slider driving electrodes in one phase together onto a bus for connection to the respective phase of the power supply. It can even be said that the spiral shapes themselves are the busses, and so the busses can be connected to their respective phases of the power supply anywhere along their length in a very convenient manner. Figure 5b shows an example of a three-phase power supply which can be used to activate an actuator according to an embodiment. In this example, shown over Figures 5a and 5b, phase 1 is applied to a first wire in the external fibre and to a first wire in the internal fibre, phase 2, which lags phase 1 by 2*pi/3 radians is applied to the second wire of the external fibre and the third wire of the internal fibre, while phase 3, which leads phase 1 by 2*pi/3 radians is applied to the third wire of the external fibre and the second wire of the internal fibre.

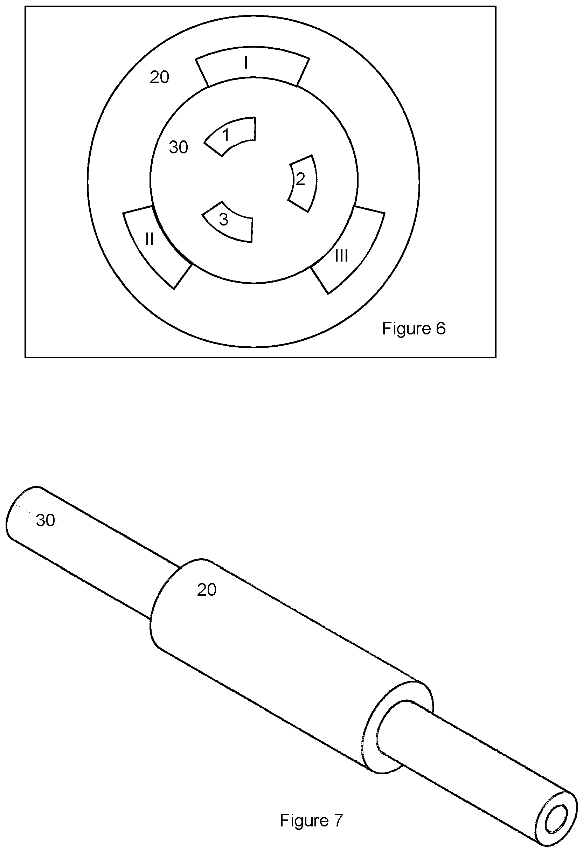

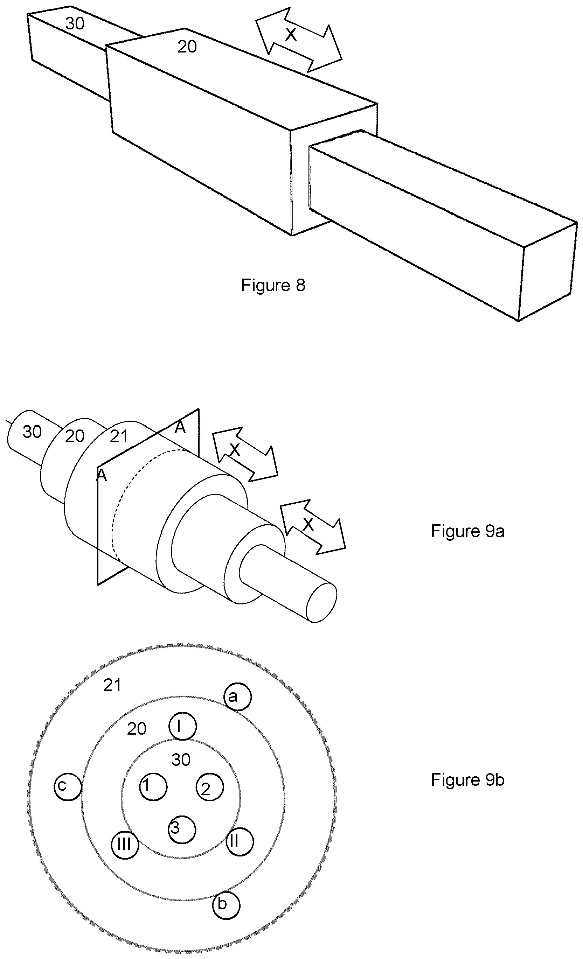

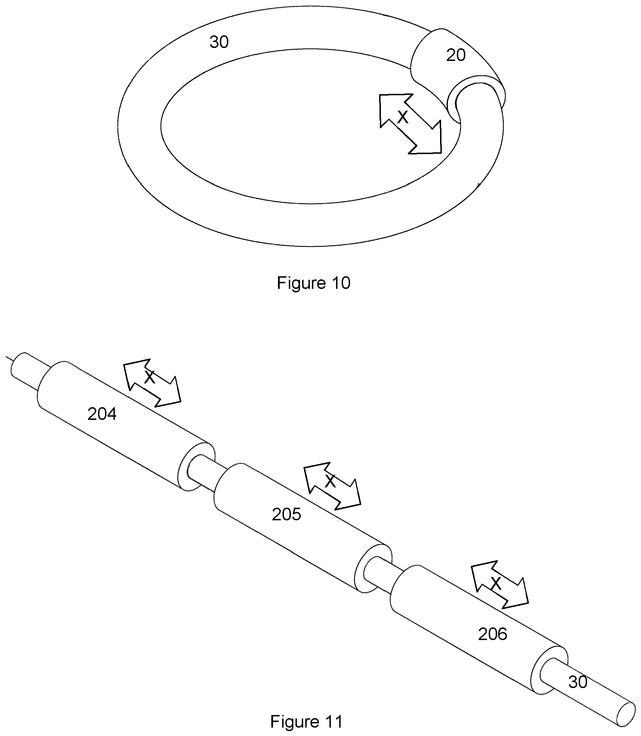

Figure 6 shows an embodiment in which the wires in the internal fibre and those in the external fibre have a generally flattened cross section, for example square or rectangular cross section. This configuration has advantages in that the electrostatic force can be increased. Figures 7 and 8 show different cross-sections which can be given to the fibres themselves according to different embodiments. Figures 9a and 9b show an embodiment which has more than 2 concentric fibres. In this embodiment the stator can be said to be made up of an internal or core fibre with a first slider formed by a median concentric fibre around the internal fibre and a second slider being formed by an external concentric fibre around at least a part of the first two. Figure 10 shows a stator having a toroidal form. Figure 11 shows a single stator with three series sliders.

Since the electrodes on the stator are formed over a set of wires wound in a substantially elongate helical structure, according to an embodiment, and the electrodes on the slider are formed over a set wires wound around at least a part of the stator, it follows that the innovative concentric fibre structure of electrostatic linear actuators according to embodiments of the present invention are immune to problems met by known electrostatic linear actuators, which generally require some means of alignment to keep their electrodes in the required relative positions to each other during operation of the actuator, because proper alignment of the electrodes is automatically achieved thanks to the concentric fibre architecture of the actuator. Actuators according to embodiments of the present invention can therefore be said to be self-aligning.

Embodiments of the present invention which use a three-phase electrostatic stimulus provide a pair of travelling potential distributions across each of three pairs of electrodes according to a three-phase ac power supply used to provide the stimulus, thereby creating an electric field interaction which provides relative translational motion between a pair of coaxial fibres around which the electrodes are wound.

In preferred embodiments of the present invention, the windings within the internal and external fibres are substantially helical in form i.e. they have a three-dimensional arrangement which sees them forming groups (usually three wires in a group) of concentric helical windings, one within the other. Connections to each of the wires in one fibre can be made either to a phase of the power supply, while connections to each of the wires in another fibre can be made directly to the appropriate phase of the power supply, or indirectly by connecting to an appropriate one from the wires in the first fibre, depending on the phase that is required. In order to engender motion between stator and slider, the connections have to lead to opposite propagating potential distributions over the opposing electrode groups. The correct choice of connections depends on whether the windings describe a right-handed helix or a left-handed helix, the sequence of connections in the internal fibre being different from those in the external fibre.

In order to activate an actuator according to an embodiment described herein, the electrostatic pressure must exceed both the static friction and the weight of the actuator's internal or external fibre. To ensure this, the voltage needs to be adjusted up or down based on the breakdown limit and the power supply or battery requirements for using the fibre. Furthermore, considering the dimensions of the various constituent parts of the electrostatic linear actuator according to embodiments described herein, the dimensions are primarily constrained by the distance between the internal and external fibres. This distance, denoted as "d," should be greater than zero and should adhere to a voltage-to-distance ratio which is higher than the breakdown limit of the insulator between the internal and external fibres For example, considering electric field values of between the internal external fibre of, say, 0.1 V/micron to 1 kV/micron, the electrostatic force is equal to:

$$Force = 12 \cdot \varepsilon 0 \cdot \varepsilon r \cdot E2 \cdot Surface,$$

where $\varepsilon 0$ is the permittivity of a vacuum, $\varepsilon r$ is the permittivity of the insulating material between the fibres (which can be a composite of multiple materials with an aggregate permittivity), E is the electric field mentioned earlier, Surface is the surface of interactions between the internal and external fibres. Then, the speed of the motor, whether internal or external, will depend on various factors such as the frequency, payload charge, and the force required. Standard plots used to characterise motors may feature Power in (electrical power), Power out (force * speed), speed and efficiency versus the load force (In figure 14, P-in, P-out, Spd, Eff, respectively). These characteristics may vary significantly depending on the dimensions of the fibre, potentially changing by several orders of magnitude.

**Claims**

1. An electrostatic actuator (10) for producing a relative translational motion between a stator (30) of the actuator and a slider (20) of the actuator substantially in a longitudinal direction (X), a plurality of mutually electrically insulated stator driving electrodes (35) being arranged along the stator generally in the longitudinal direction of the actuator, and a plurality of mutually electrically insulated slider driving electrodes (25) being arranged along the slider generally in the longitudinal direction of the actuator, the stator driving electrodes being electrically insulated from the slider driving electrodes, wherein the stator driving electrodes are grouped and interconnected into n stator busses and the slider driving electrodes are grouped and interconnected into n slider busses, said groupings being such that the n stator busses are configured to allow their connection, in a predetermined order, to one each from n power supply outputs and the n slider busses are configured to allow their connection, in a different predetermined order, to one each from the n power supply outputs, each of said n power supply outputs configurable to provide different phases of time-varying power, said connections allowing to create a first travelling potential distribution over the stator driving electrodes and a second travelling potential distribution over the slider driving electrodes, thus creating electrostatic forces between the stator and the slider to produce said relative translational motion;
**characterised in that**:

the plurality of stator driving electrodes from each one from the n busses are formed along a corresponding one from n at least first stator wires (1, 2, 3), each first stator wire, for each bus, having a three-dimensional configuration of electrically insulated stator windings extending in the longitudinal direction around an electrically insulating core comprising a dielectric; and the plurality of slider driving electrodes from each one from the n busses are formed along a corresponding one from n at least first slider wires (I, II, III), each first slider wire, for each bus, having a three-dimensional configuration of electrically insulated slider windings, concentric with the first stator windings, extending in the longitudinal direction around at least a part of the first stator windings;

said three-dimensional configurations of stator windings and slider windings allowing for said connections between the n power supply outputs, the n stator busses and the n slider busses to thus be inherently achievable at any point along the respective windings.

2. The electrostatic actuator according to claim 1, comprising at least one further slider (21, 204, 205, 206) comprising at least n further slider wires (a, b, c), one for each of the n busses, forming a further plurality of slider driving electrodes, the further slider wires having a three-dimensional configuration of electrically insulated slider windings extending in the longitudinal direction around either adjacent portions of the stator windings (30) formed by the first stator wires or around at least a part of the slider windings formed by the first slider wires.

3. The electrostatic actuator according to claim 1, comprising a plurality of parallel sliders (201, 202, 203) and a corresponding plurality of parallel stators (301, 302, 303).

4. The electrostatic actuator according to claim 3, wherein the plurality of sliders are physically joined together so that they move together.

5. The electrostatic actuator according to either of claims 1 or 2, wherein the stator is of a toroidal form.

6. The electrostatic actuator according to any of the preceding claims, wherein said stator wires and slider wires have a substantially round cross-section or a generally flattened cross-section.

7. The electrostatic actuator according to any of the preceding claims, wherein the windings have a substantially helical form.

8. The electrostatic actuator according to any of the preceding claims, wherein all of the windings have winding pitches which are substantially equal to each other.

9. The actuator according to any of the preceding claims, wherein n has a value of at least 3, the actuator thereby being a bidirectional actuator.

10. The actuator according to any of the preceding claims, wherein said dielectric comprised in said electrically insulating core comprises a gas such as air, a liquid or a polymer.

11. The actuator according to any of the preceding claims, further comprising a lubricant between any of the stator and slider windings.

12. The actuator according to any of the preceding claims, wherein the stator and the slider are flexible.

13. The actuator according to any of the preceding claims, wherein the stator is substantially longer than the slider.

14. A linear electrostatic motor comprising an actuator according to any of claims 1 to 13.

15. The linear electrostatic motor according to claim 14, further comprising a power supply configured to generate n phases of time-varying power to drive the n busses to create a first travelling potential distribution over the stator driving electrodes and a second travelling potential distribution over the slider driving electrodes, thus creating electrostatic forces between the stator and the slider to produce said relative translational motion.

10

26

25

I

II

III

20

X

30

40

35

36

Figure 1

30

20

B

A

B

A

X

Figure 2

Figure 3a

Figure 3b

Figure 3c

Figure 4

Figure 5a

Figure 5b

Figure 6

Figure 7

Figure 8

Figure 9a

Figure 9b

Figure 10

Figure 11

Figure 12

Figure 13a

Figure 13b

Figure 14

Europäisches
Patentamt

European
Patent Office

Office européen
des brevets

# EUROPEAN SEARCH REPORT

**Application Number**

EP 23 19 4984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H04 222471 A (RICOH KK) 12 August 1992 (1992-08-12) | 1,3, 6-11, 13-15 | INV. H02N1/00 |
| A | * paragraphs [0001], [0014] – [0017] * * figures 1,4 * | 2,4,5,12 | |
| A | EP 2 523 340 A1 (OMRON TATEISI ELECTRONICS CO [JP]) 14 November 2012 (2012-11-14) * paragraphs [0026], [0028], [0031] – [0033] * * figures 1,3 * | 1-15 | |

**TECHNICAL FIELDS SEARCHED (IPC)**

H02N

The present search report has been drawn up for all claims

| Place of search | Date of completion of the search | Examiner |
|---|---|---|
| Berlin | 25 January 2024 | Foussier, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 518 140 A1

## ANNEX TO THE EUROPEAN SEARCH REPORT
## ON EUROPEAN PATENT APPLICATION NO.

EP 23 19 4984

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2024

| Patent document cited in search report | | Publication date | Patent family member(s) | | Publication date |
|---|---|---|---|---|---|
| JP H04222471 | A | 12-08-1992 | NONE | | |
| EP 2523340 | A1 | 14-11-2012 | CN | 102656793 A | 05-09-2012 |
| | | | EP | 2523340 A1 | 14-11-2012 |
| | | | JP | 5568993 B2 | 13-08-2014 |
| | | | JP | 2011142759 A | 21-07-2011 |
| | | | KR | 20120083468 A | 25-07-2012 |
| | | | US | 2013134828 A1 | 30-05-2013 |
| | | | WO | 2011083658 A1 | 14-07-2011 |

EPO FORM P0459

For more details about this annex : see Official Journal of the European Patent Office, No. 12/82

19